# NEUE EUROPÄISCHE PATENTSCHRIFT

(11) **EP 2 052 777 B2**
(45) Veröffentlichungstag und Bekanntmachung des Hinweises auf die Entscheidung über den Einspruch: **28.12.2016**
(45) Hinweis auf die Patenterteilung: 10.04.2013
(21) Anmeldenummer: 08167137.2
(22) Anmeldetag: 21.10.2008
(51) Int. Cl.: B29C 51/30, G01N 21/84, G01N 21/01

(54) **Wannenförmiges Behältnis für optisch zu analysierende Testobjekte und Herstellungsvorrichtung dafür**
Tub-shaped container for test objects to be analysed optically and manufacturing device therefor
Récipient en forme de cuve pour objets de test devant être analysés optiquement et dispositif de fabrication correspondant

(30) Priorität: 24.10.2007 DE 202007014923 U; 14.08.2008 US 88748 P
(43) Veröffentlichungstag der Anmeldung: 29.04.2009
(73) Patentinhaber: BioSciTec GmbH, 60489 Frankfurt am Main (DE)
(72) Erfinder: Jäger, Robert, Dr., 65719, Hofheim/Ts. (DE); Dirla, Felix, 65931, Frankfurt am Main (DE)
(74) Vertreter: 2K Patentanwälte Blasberg Kewitz & Reichel

(56) Entgegenhaltungen:
- EP-A- 0 646 784
- EP-A- 1 055 457
- WO-A-88/07202
- WO-A-96/12940
- DE-A1- 19 815 943
- US-A- 5 418 136

## Beschreibung

Die Erfindung betrifft ein wannenförmiges Behältnis, das für die Laboranalyse von optisch zu beleuchtenden Testobjekten geeignet ist, insbesondere eine Inkubationswanne für Teststreifen, die in der medizinischen Diagnostik eingesetzt wird. Außerdem betrifft die Erfindung eine Herstellungsvorrichtung zum Tiefziehen eines solchen wannenförmigen Behältnisses aus einem thermoplastischen Kunststoff.

In der medizinischen Diagnostik, wie auch allgemein in der Laboranalyse, werden verschiedene Arten von optisch unter Licht zu bewertenden Testobjekten, insbesondere Teststreifen, in wannenförmigen Behältnissen inkubiert. Die visuelle Auswertung dieser Teststreifen lässt Rückschlüsse z.B. auf den aktuellen Krankheitsstatus des untersuchten Patienten zu.

Noch häufig werden in der medizinischen Diagnostik die Ergebnisse und Versuche bloß mit dem menschlichen Auge ausgewertet. Dazu werden die Testobjekte ggf. in den Behältnissen, die auch als Inkubationswannen bezeichnet werden, unter Licht begutachtet. Eine solche rein visuell durchgeführte Auswertung kann aber gerade hier, wo sichtbare Farbreaktionen der Teststreifen direkt Aufschluss über Allergien, Drogenkonsum oder Infektionen geben, nur von fachkundigen Personen, insbesondere von Ärzten und geschultem Personal, zuverlässig durchgeführt werden.

Typischerweise weisen die zu untersuchenden Testobjekte bzw. Teststreifen ein bestimmtes Reaktionsmuster mit vielen helleren und dunkleren Strichen auf, welche aufgrund ihrer Stärke und ihres Musterbildes ein klarer Indikator für eine bestimmte Krankheit sind. Beispielsweise können hierbei Vergleichsstreifen bzw. Mustervorlagen, die mit den Farbreaktionen der Patienten-Teststreifen verglichen werden, klar Auskunft über das Auftreten und die Stärke einer Erkrankung, wie z.B. der von Zecken übertragenden Borreliose, geben. Allerdings sind neben der mangelhaften Vergleichbarkeit einer rein visuellen Diagnose auch der Aufwand für die Auswertung und die anschließende Archivierung sehr hoch. Insbesondere müssen sämtliche Teststreifen mit den darauf auftretenden Farbreaktionen wegen ihrer Lichtempfindlichkeit im Dunkeln aufbewahrt werden. Die Archivierung ist wiederum notwendig, um eine spätere Überprüfung von Testergebnissen zu ermöglichen.

Wünschenswert ist daher eine automatisierbare Auswertung solcher optisch zu analysierender Testobjekte bzw. Teststreifen, wobei neben der Inkubation auch eine störungsfreie Bilderzeugung erzielt werden soll.

Deshalb und zum Zwecke der Standardisierung sowie zur Steigerung der Effizienz werden vermehrt auch semiautomatisierte Verfahren bzw. softwaregestützte Systeme zur Analyse von Teststreifen herangezogen. Da diese Systeme und Verfahren für eine zuverlässige Auswertung immer ein möglichst störungsfreies, vorzugsweise digitales, Bild der Teststreifen benötigen, kommt es insbesondere auf die Qualität der Bilderzeugung an. Hierzu werden üblicherweise die Teststreifen mit verschiedenen Methoden bzw. mit einer oder mehreren Lichtquellen beleuchtet, um dann mittels photoelektronischer Aufnahmemittel ein Digitalbild zu generieren.

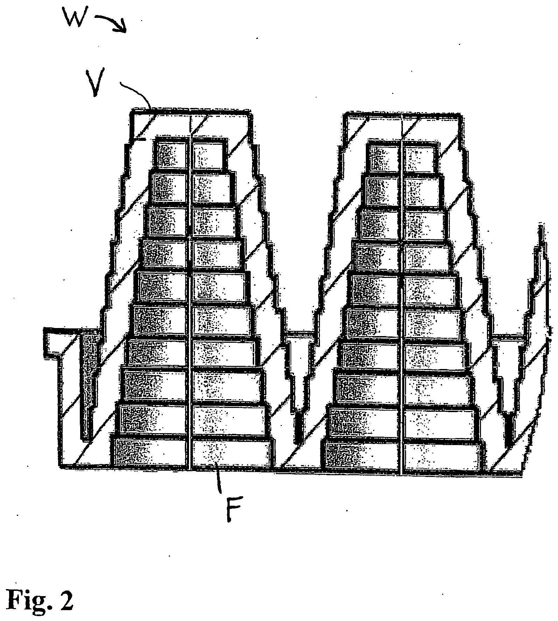

In der DE 299 00 424 U1 wird ein Aufbewahrungs- und Inkubationsbehältnis für Western-Blot-Streifen offenbart, welches aus mehreren baugleichen Schalen besteht, welche abwechselnd als Unterteil oder Oberteil dienen können. Die Vertiefungen der Schalen weisen einen nach unten hin verjüngten Querschnitt auf (s. dort Fig. 2), so dass mehrere Schalen aufeinander gestapelt werden können und dennoch jeweils ein ausreichender Zwischenrum zur Aufnahme eines Western-Blot-Streifens verbleibt. Die Schalen können aus einem dunkel gefärbten Kunststoff gefertigt sein. Am Kopfende der Vertiefungen sind Nummernfelder vorgesehen, um handelsübliche durchnummerierte Streifen einfacher entsprechend ihrer Nummerierung verwenden zu können und somit dem dort beschrieben "Smile"-Effekt Rechnung zu tragen.

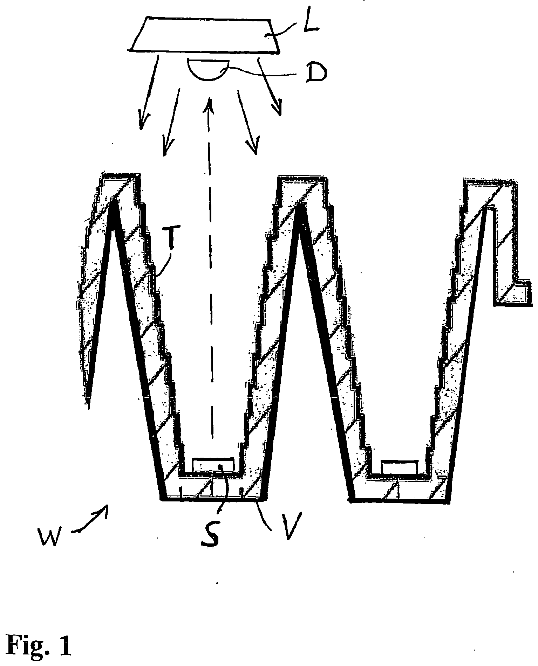

In der EP 0 837 320 A2 wird ein Analyse-System beschrieben, wobei dort ein wannenförmiges Behältnis (siehe dort "tray 20" in Fig. 1 und 2) zum Einsatz kommt, das mehrere Vertiefungen zur Aufnahme von Teststreifen aufweist. Das Behältnis ist als Schublade ausgebildet, die in das Diagnosegerät ("spektrometer 10") eingeschoben wird.

In der in 2005 veröffentlichten Produktbeschreibung "Automatische Auswertung membranbasierter Testsysteme um EUROlineScan" der Firma EUROIMMUN AG, Lübeck, Deutschland (Prospekt Nr. DV_0000_1_DE_G02, 11/2005) wird ein weiteres System vorgestellt. Dort werden Inkubationswannen verwendet, die mehrere längliche Vertiefungen aufweisen, in die Teststreifen hineingelegt werden können, um sie einer digitalen Bildaufnahme (Abtastung bzw. Scanning) und anschließenden Analyse zu unterziehen.

In der EP 1 055 457 A2 wird ein Probenträger für die IR-Spektroskopie beschrieben, der rillenförmige Vertiefungen aufweist, um eine zu untersuchende Flüssigkeit durch Kapillarwirkung aufzusaugen. Ein wannenförmiges Behältnis für Teststreifen oder dergleichen wird dort nicht beschrieben.

In der EP 0 646 784 A1 werden eine Vorrichtung und ein Verfahren zum optischen Erfassen von Teststreifen beschrieben. Die Teststreifen werden auf ein sogenanntes Lesefeld (siehe "reading field 14" in Fig. 1) gelegt, welches einem flachen Tablett entspricht. Ein wannenförmiges Behältnis für Teststreifen oder dergleichen wird dort nicht beschrieben.

Aufgrund einer langen Erfahrung auf dem Gebiet der Quantifizierung von wissenschaftlichen Farbreaktionen in der Forschung entwickelte die Anmelderin eine software-gestütztes Abtastverfahren (Scanning) zur automatisierten Analyse diagnostischer Teststreifen, die besonders in der Routine-Diagnostik von Nutzen ist. Für die Routine-Diagnostik ist es wünschenswert, dass die Teststreifen nicht mehr mit der Hand aus der jeweiligen Inkubationswanne genommen und auf den Scanner gelegt werden, sondern in der Inkubationswanne verbleiben können, um dort ausgelesen bzw. abgescannt zu werden.

Die vorliegende Erfindung beruht nun auf der Erkenntnis, dass für die weitere Bildverarbeitung ein hoher Kontrast zwischen Teststreifen und Inkubationswanne im erzeugten Bild wichtig ist.

Unter anderem ist Aufgabe der vorliegenden Erfindung, ein verbessertes wannenförmiges Behältnis, insbesondere eine Inkubationswanne für Teststreifen, vorzuschlagen, die eine deutlich bessere Bildverarbeitung der optisch zu beleuchtenden und auszuwertenden Testobjekte ermöglicht.

Außerdem soll eine Herstellungsvorrichtung zum Tiefziehen eines solchen wannenförmigen Behältnisses aus einem thermoplastischen Kunststoff vorgeschlagen werden.

Gelöst wird die Aufgabe durch ein wannenförmiges Behältnis mit den Merkmalen des Anspruchs 1 sowie durch eine Herstellungsvorrichtung mit den Merkmalen des nebengeordneten Anspruchs.

Demnach wird ein wannenförmiges Behältnis, nämlich eine Inkubationswanne, vorgeschlagen, die für die Laboranalyse von optisch zu analysierenden Teststreifen geeignet ist und mehrere Vertiefungen zur Aufnahme des jeweiligen Teststreifens aufweist, wobei die Vertiefungen Wandungen mit entsprechend einer Profilierung strukturierten Innenflächen mit einer rillenförmigen oder treppenförmigen Struktur aufweisen. Hierdurch wird eine deutliche Verringerung bzw. vollkommene Reduktion störender Reflexionen und sonstiger optischer Irritationen erreicht.

Das Behältnis ist als eine mit mehreren länglich sich erstreckenden Vertiefungen versehene Inkubationswanne für Teststreifen ausgebildet. Dabei weisen die sich länglich erstreckenden Vertiefungen nur an ihren längseitigen Innenflächen eine Struktur auf, die in Längsrichtung orientiert ist. Die Inkubationswanne ist aus einem thermoplastischen Kunststoff mittels eines Tiefziehverfahrens gefertigt, wobei der Kunststoff dunkel gefärbt ist.

Dabei sind die Vertiefungen vorzugsweise konisch geformt, wobei eine jede Vertiefung von ihrem Grund ausgehend sich zu ihrer Öffnung hin aufweitet. Die konische Formgebung kann geradlinige wie auch gewölbte Wandungen umfassen und ist bevorzugt nur leicht ausgeprägt (steile Wandungen). Auch kann das wannenförmige Behältnis so geformt sein, dass die jeweilige Vertiefung nicht gleichmäßig konisch ausgeformt ist, sondern von ihrem Grund ausgehend sich mit einer sich ändernden Steigung zu ihrer Öffnung hin aufweitet. Beispielsweise ist die konische Ausformung im unteren Bereich der Vertiefung flacher ausgeformt als im oberen Bereich.

Auch wird hier eine Herstellungsvorrichtung zum Tiefziehen eines solchen wannenförmigen Behältnisses aus einem thermoplastischen Kunststoff vorgeschlagen, wobei die Vorrichtung eine Positivform und eine Negativform mit rillenförmiger und/oder treppenförmiger Struktur aufweist. Da beide Formen eine aufeinander abgestimmte Struktur haben, die der gewünschten Profilierung der Vertiefungen entspricht, wird beim Tiefziehen des Kunststoffes (Folie, dünne Platte) ein optimales Ergebnis erreicht.

Diese und weitere Vorteile ergeben sich auch aus den Unteransprüchen.

Nachfolgend wird die Erfindung näher anhand eines Ausführungsbeispiels in Gestalt einer Inkubationswanne beschrieben. Dabei wird auf die beiliegenden schematischen Zeichnungen Bezug genommen, die folgendes darstellen:
- Fig. 1: zeigt im Querschnitt den Aufbau eines erfindungsgemäßen Behältnisses in Gestalt einer Inkubationswanne mit rillenförmiger Struktur;
- Fig. 2: verdeutlicht die Funktion der Herstellungsvorrichtung zum Tiefziehen einer solchen aus Kunststoff gefertigten Inkubationswanne;
- Fig. 3a/b: zeigen im Vergleich Bildaufnahmen von Teststreifen in einer üblichen Inkubationswanne und in der erfindungsgemäß gestalteten (und wie in Fig. 1 gezeigten) Inkubationswanne; und
- Fig. 4a/b/c: zeigen in verschiedenen Ansichten die Abmessungen und konische Formgestaltung einer einzelnen Vertiefung.

Die Fig. 1 zeigt im Querschnitt ein als Inkubationswanne ausgebildetes Behältnis W mit mehreren Vertiefungen V, deren Innenfläche F eine rillenförmige bzw. treppenförmige Struktur aufweist. Die Inkubationswanne W, im weiteren auch kurz Wanne genannt, hat z.B. 50 nebeneinander angeordnete und länglich sich erstreckende Vertiefungen, die als V-förmige Rinnen ausgestaltet sind. Die Wanne W besteht aus einem tiefgezogenen, dunkel gefärbtem Kunststoff, und wird in Gestalt eines Tabletts mit 50 parallel ausgeformten Vertiefungen gefertigt.

Die Fig. 1 zeigt beispielhaft einen Ausschnitt der Wanne W mit zwei benachbarten Vertiefungen V, die jeweils etwa 1 cm tief sind. Die Wanne W kann in jeder Vertiefungen V jeweils einen Teststreifen S aufnehmen und erlaubt somit die Untersuchung bzw. den Nachweis einer Krankheit für 50 Patienten. Um mehrere Wannen mit den jeweils darin befindlichen Teststreifen zu scannen, hat die Anmelderin einen Scanner bzw. ein Scanning-System entwickelt, bei dem die Teststreifen in den Wannen liegend digital erfasst und analysiert werden können. Das System kann eine semiautomatisierte Auswertung der Teststreifen durchführen sowie dem Arzt eine Diagnose vorschlagen. In der Fig. 1 wird das System vereinfacht durch eine Lichtquelle L und einen Detektor bzw. Scanner D repräsentiert.

Für die optische Analyse und Bildverarbeitung soll nun eine sehr große Tiefenschärfe erreicht werden, um die Teststreifen S in der jeweiligen Wanne W exakt zu erfassen. Aufgrund der komplexen Problematik einer optimalen Beleuchtung, kommt es bei herkömmlichen Wannen vor, dass sich die Teststreifen an den Wänden der Vertiefungen spiegeln und somit imaginäre Bilder entstehen. Darüber hinaus kann es vorkommen, dass sich die Lichtquelle am Boden der Vertiefung ungleichmäßig spiegelt, und im ungünstigsten Fall diese Spiegelung eine imaginäre Verlängerung des Teststreifens erzeugt.

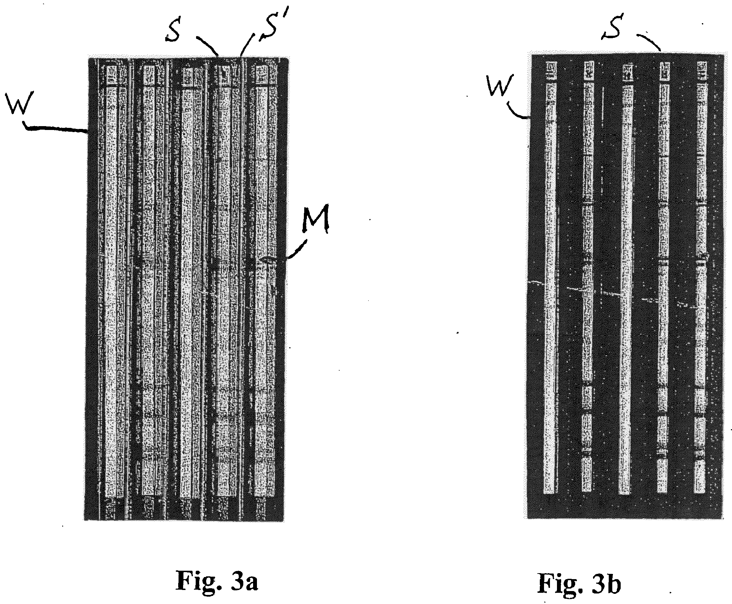

Die Fig. 3a veranschaulicht den ersteren Störeffekt, der bei einer herkömmlichen Wanne auftritt. Die Fig. 3b zeigt im Vergleich dazu die deutlich verbesserte Situation, die durch eine erfindungsgemäß innwandig strukturierte Wanne W (s. Fig. 1) erzielt wird. Auf beide Figuren 3a/b sowie auf Fig. 1 wird deshalb nachfolgend Bezug genommen:
Wie die Fig. 3a zeigt, werden bei Verwendung einer herkömmlichen Wanne nicht nur die tatsächlich vorhandenen Teststreifen S abgebildet, sondern auch ein oder mehrere Scheinbilder S' bzw. imaginäre Teststreifen S'. Diese "Geisterstreifen" finden sich hauptsächlich auf einer Seite des Wannenrandes wieder. Die Anmelderin hat erkannt, dass dieser Störeffekts abhängig von der Seite der Beleuchtung bzw. der Position der Lichtquelle L ist und dass fälschlicherweise solche "Geisterstreifen" zumindest in Teilen von der Auswertungs-Software als echte Teststreifen eingestuft und einer Auswertung bzw. Analyse unterzogen werden.

Durch Einsatz eines Behältnisses wie beispielsweise der in Fig. 1 dargestellten Wanne W, ergibt sich die in der Fig. 3b veranschaulichte Situation einer deutlich verbesserten Bildaufnahme. Es erscheinen nun keine "Geisterstreifen" mehr, so dass sich die Auswertungsqualität deutlich erhöht.

Bei der Gestaltung der neuen Wanne W hat sich gezeigt, dass eine rillenförmige bzw. treppenförmige Struktur dann besonders gut geeignet ist, wobei die Struktur der Innenfläche F eine erste Kantenseite K1 aufweist, die nach oben zur Öffnung der Vertiefung V hin ausgerichtet ist und die Struktur eine zweite Kantenseite K2 aufweist, die schräg abgewinkelt dazu, zum Innern der Vertiefung V hin ausgerichtet ist. Die Abwinkelung ist vorzugsweise nicht exakt rechtwinklig, so dass die Kantenseiten K2 konusartig verlaufen. Hierdurch kann beim Tiefziehen der Kunststoff-Wanne, diese wieder leichter von der Form F entfernt werden (s. auch Fig. 2).

Hinsichtlich der gewünschten deutlichen Absorption von Streulicht und der Verbesserung der optischen Eigenschaften der Wanne W hat sich gezeigt, dass es vorteilhaft ist, wenn die zueinander abgewinkelt angeordneten Kantenflächen K1 und K2 unterschiedlich groß ausgebildet sind, insbesondere derart ausgebildet sind, dass die erste Kantenfläche K1 kleiner als die zweite Kantenfläche K2 ist. Hierdurch ergibt sich die in der Fig. 1 dargestellte steile Treppenform, die eine hohe Steigung aufweist, wodurch die kleineren Kantenflächen K1 eine entsprechend geringere Reflexionsfläche bieten.

Das wannenförmiges Behältnis bzw. die Wanne W hat vorzugsweise die Gestalt eines Tablettes mit mehreren, ca. 50, parallel zueinander angeordneten und sich länglich erstreckenden Vertiefungen V. Hierbei kann vorgesehen werden, dass die Vertiefungen V nur an ihren längseitigen Innenflächen F eine Struktur aufweisen, die in Längsrichtung orientiert ist und insbesondere die in Fig. 1 gezeigte rillenförmige bzw. treppenförmige Struktur aufweisen.

Anhand der Fig. 3 wird nun die Herstellung einer solchen Wanne W veranschaulicht:
Die Wanne W ist aus einem thermoplastischen Kunststoff, insbesondere aus Polystyrol, mittels eines Tiefziehverfahrens gefertigt, wobei der Kunststoff dunkel gefärbt, insbesondere schwarz gefärbt ist. Zur Herstellung wird eine Kunststofffolie bzw. dünne Kunststoffplatte erwärmt und in einer Vorrichtung bzw. Presse zu der gewünschten Form tiefgezogen. Die Presse kann dazu Negativ- und Positivformen sowie entsprechende Stempel aufweisen. Bei Verwendung einer Positivform (wie in Fig. 2 als Element "P" dargestellt) braucht der Stempel (nicht dargestellt) keine Struktur aufzuweisen. Bei einer Negativform weist vorzugsweise auch der Stempel die gewünschte Struktur auf.

Es hat sich gezeigt, dass neben einer Strukturierung der Wandungen es vorteilhaft ist, wenn zumindest auch der Boden der Vertiefung eine Struktur aufweist, um Reflexionen zu vermeiden. Hierzu kann insbesondere der Boden mit einer rauhen Struktur versehen werden, indem die gesamte Oberfläche des Tiefziehwerkzeugs gestrahlt werden, so dass das Rohmaterial eine rauhe Oberfläche erhält. Die Profilierung der Seitenwände erfolgt beim Tiefziehen über die Rillenstruktur der Formen.

In der Fig. 3 ist beispielhaft nur die Positivform P dargestellt, die die gewünschte rillenförmiger und/oder treppenförmiger Struktur aufweist. Die Negativform ist entsprechend spiegelbildlich ausgestaltet. Dadurch, dass beide Formen eine zueinander abgestimmte Struktur haben, ergibt sich beim Tiefziehen der Folie bzw. Platte eine exakte und optimale Formgebung. Die hier gezeigte Treppenstruktur ist konusförmig angelegt, damit nach Abschluss des Tiefziehvorgangs die fertig gezogene Wanne W wieder leicht von den Formen gelöst werden kann.

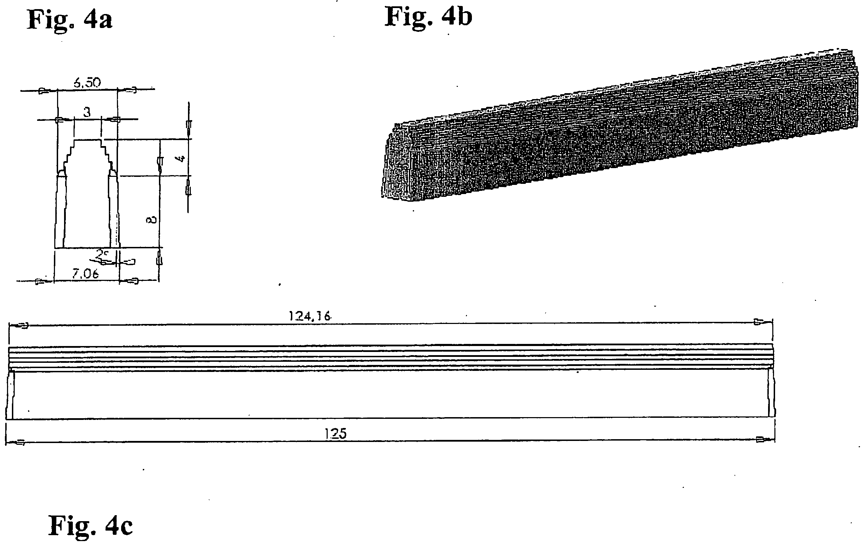

Die Figuren 4a, 4b und 4c zeigen in verschiedenen Ansichten die Abmessungen (in mm) und konische Formgestaltung einer einzelnen Vertiefung. Die Vertiefung kann dabei auch so geformt sein, dass sie von ihrem Grund ausgehend sich mit einer sich ändernden Steigung zu ihrer Öffnung hin aufweitet. Insbesondere kann die Vertiefung in ihrem Grundbereich (hier oben liegend dargestellt) flachere bzw. flacher ansteigende Wandungen aufweisen als in ihrem Öffnungsbereich (hier unten liegend).

Durch die beschriebende Herstellungsvorrichtung können sehr effektiv Inkubationswannen im Tiefziehverfahren aus Kunststoff, vorzugsweise aus dunklem Polystyrol, hergestellt werden. Es kommen dabei die beschriebenen Formen zum Einsatz, die sowohl Positiv- als auch Negativ-Werkzeuge mit oder ohne Stempel umfassen. Um möglichst gleichbleibende Reflektionseigenschaften zu erzielen, ist zu beachten, dass sowohl das Rohmaterial Schwankungen unterliegt als auch die Tiefziehtemperatur einen großen Einfluss auf die Charakteristika des Endproduktes hat. Beide Parameter müssen deshalb möglichst konstant gehalten werden. Dieser Problematik wird mit einer gezielten Oberflächenstruktur der Inkubationswanne W Rechnung getragen. Hierzu wird die gesamte Oberfläche des Tiefziehwerkzeugs gestrahlt und die Seitenwände (Innen und Außen) der Vertiefungen in der Wanne W mit einem Rillenprofil versehen. Die Anmelderin konnte in Versuchen feststellen, dass dadurch in Kombination mit einem relativ mattem Rohmaterial und einer mittlerer Tiefziehtemperatur gleichbleibende und optimale Reflektionseigenschaften der Inkubationswanne für die Bilderzeugung realisiert werden können.

### Bezugszeichenliste

| | |
|---|---|
| W | Wannenförmiges Behältnis (Inkubationswanne) |
| V | Vertiefung(en) der Wanne W |
| F | strukturierte Innenfläche der Vertiefung V bzw. der Wanne |
| K1 | erste Kantenfläche (zeigt in Richtung Öffnung der Vertiefung) |
| K2 | zweite Kantenfläche (zeigt ins Innere der Vertiefung) |
| S | Teststreifen |
| S' | imaginärer Teststreifen ("Geister-Teststreifen") |
| L | Lichtquelle |
| D | Lichtdetektor bzw. Scanner |
| P | Tiefzieh-Form (Positivform) |
| M | Reaktions-Muster |

## Patentansprüche

1. Inkubationswanne (W) geeignet für die Laboranalyse von optisch zu analysierenden Teststreifen (S), wobei die Inkubationswanne (W) mehrere Vertiefungen (V) zur Aufnahme des jeweiligen Teststreifens (S) aufweist, und wobei die Inkubationswanne als eine mit mehreren länglich sich erstreckenden Vertiefungen (V) versehene Inkubationswanne (W) für die labortechnisch zu analysierenden Teststreifen (S) ausgebildet ist, **dadurch gekennzeichnet, dass** die Vertiefungen (V) Wandungen mit entsprechend einer Profilierung strukturierten Innenflächen (F) aufweisen, wobei die Vertiefungen (V) strukturierte Innenflächen (F) mit einer rillenförmigen oder treppenförmigen Struktur aufweisen, dass die sich länglich erstreckenden Vertiefungen (V) nur an ihren längseitigen Innenflächen (F) eine Struktur aufweisen, die in Längsrichtung orientiert ist, und dass die Inkubationswanne (W) aus einem thermoplastischen Kunststoff mittels eines Tiefziehverfahrens gefertigt ist, wobei der Kunststoff dunkel gefärbt ist.

2. Inkubationswanne (W) nach Anspruch 1, **dadurch gekennzeichnet, dass** die Vertiefungen (V) konisch mit sich ändernder Wandung ausgeformt sind, wobei eine jede Vertiefung (V) von ihrem Grund ausgehend sich zu ihrer Öffnung hin aufweitet.

3. Inkubationswanne (W) nach einem der Ansprüche 1 oder 2, **dadurch gekennzeichnet, dass** eine jede Vertiefung (V) von ihrem Grund ausgehend sich mit einer sich ändernden Steigung zu ihrer Öffnung hin aufweitet.

4. Inkubationswanne (W) nach Anspruch 3, **dadurch gekennzeichnet, dass** die treppenförmige Struktur eine erste Kantenseite (K1) aufweist, die zur Öffnung der Vertiefung (V) hin ausgerichtet ist und eine zweite Kantenseite (K2) aufweist, die schräg abgewinkelt dazu, insbesondere nicht rechtwinklig abgewinkelt dazu, zum Innern der Vertiefung (V) hin ausgerichtet ist.

5. Inkubationswanne (W) nach Anspruch 4, **dadurch gekennzeichnet, dass** die zueinander abgewinkelt angeordneten Kantenflächen (K1, K2) unterschiedlich groß ausgebildet sind, insbesondere derart ausgebildet sind, dass die erste Kantenfläche (K1) kleiner als die zweite Kantenfläche (K2) ist.

6. Inkubationswanne (W) nach einem der vorhergehenden Ansprüche, **dadurch gekennzeichnet, dass** auch der Boden der jeweiligen Vertiefungen (V) eine Struktur, insbesondere eine rauhe Oberfläche aufweist.

7. Herstellungsvorrichtung zum Tiefziehen einer Inkubationswanne (W) mit den Merkmalen nach einem der vorhergehenden Ansprüche aus einem thermoplastischen Kunststoff, **dadurch gekennzeichnet, dass** die Herstellungsvorrichtung eine Positivform (P) und eine Negativform mit rillenförmiger und/oder treppenförmiger Struktur aufweist.

## Claims

1. Incubation tray (W) suitable for the laboratory analysis of optically analyzed test strips (S), the incubation tray (W) having a plurality of recesses (V) for receiving the respective test strips (S), and the incubation tray being designed as an incubation tray (W) for test strips (S) to be analyzed by laboratory techniques, the incubation tray comprising several length-wise extending recesses (V), **characterized in that** the recesses (V) comprising walls with inner surfaces (F) being structured according to a profile, wherein the recesses (V) comprise structured inner surfaces (F) having a groove-shaped or stair-shaped structure, and that the length-wise extending recesses (V) only comprise structures at their length-wise inner surfaces (F) being length-wise oriented, and that the incubation tray (W) is made of a thermo-plastic material by means of a thermo-forming method, the plastic material being is dark colored.

2. Incubation tray (W) of claim 1, **characterized in that** the recesses (V) are cone-shaped formed having altering walls, wherein each of the recesses (V) expands from its bottom to its opening.

3. Incubation tray (W) of one of the claims 1 or 2, **characterized in that** each recess (V) expands from its bottom to its opening with an altering inclination.

4. Incubation tray (W) of claim 3, **characterized in that** the stair-shaped structure comprises a first edge surface (K1), being oriented to the opening of the recess, and comprises a second edge surface (K2) being bended thereto, in particular not being bended rectangular, and being oriented to the inside of the recess (V).

5. Incubation tray (W) of claim 4, **characterized in that** the edge surfaces (K1, K2) angled to each other are designed in different sizes, in particular designed such that the first edge surface (K1) is smaller than the second edge surface (K2).

6. Incubation tray (W) of one of the preceding claims, **characterized in that** also the bottom of the particular recess (V) comprises a structure, in particular a rough surface.

7. Production device for thermo-forming an incubation tray (W) from thermo-plastic material, having the features of one of the proceeding claims, **characterized in that** the production device comprises a positive form (P) and a negative form, having a groove-shaped and/or stair-shaped structure being length-wise oriented.

## Revendications

1. Cuve d'incubation (W), adaptée pour l'analyse en laboratoire de bandelettes de test (S) à analyser de manière optique, la cuve d'incubation (W) ayant une pluralité de creux (V) pour recevoir les bandelettes de test respectives (S), et la cuve d'incubation étant conçue pour être une cuve d'incubation (W) pour des bandelettes de tests (S) à analyser par des techniques de laboratoire, la cuve d'incubation comprenant plusieurs creux (V) s'étendant en longueur, **caractérisée en ce que** les creux (V) comportent des parois avec des surfaces intérieures (F) structurées selon un proflage, dans laquelle les creux (V) comportent des surfaces intérieures structurées (F) en forme de rainure ou en gradins, et les creux s'étendant en longueur (V) comportent uniquement des structures sur les surfaces intérieures (F) longitudinales qui sont orientées longitudinalement, et **en ce que** la cuve d'incubation (W) est réalisée en matériau thermo-plastique au moyen d'un procédé de thermoformage, le matériau plastique étant de couleur sombre.

2. Cuve d'incubation (W) selon la revendication 1, **caractérisée en ce que** les creux (V) sont de forme conique à paroi variable, chaque creux (V) s'élargissant en partant de son fond jusqu'à son orifice.

3. Cuve d'incubation (W) selon l'une quelconque des revendications 1 à 2, **caractérisée en ce que** chaque creux (V) s'élargit en partant de son fond jusqu'à son orifice avec une pente variable.

4. Cuve d'incubation (W) selon la revendication 3, **caractérisée en ce que** la structure en gradins présente une première face d'arête (K1) orientée vers l'orifice du creux (V) et une deuxième face d'arête (K2) orientée vers l'intérieur du creux (V) sous un angle oblique par rapport à celle-ci, en particulier sous un angle non perpendiculaire par rapport à celle-ci, et orientée vers l'intérieur du creux (V).

5. Cuve d'incubation (W) selon la revendication 4, **caractérisée en ce que** les surfaces d'arête (K1, K2) disposées sous un angle l'une par rapport à l'autre sont réalisées dans des dimensions différentes, en particulier réalisées de telle sorte que la première surface d'arête (K1) est plus petite que la deuxième surface d'arête (K2).

6. Cuve d'incubation (W) selon l'une quelconque des revendications précédentes, **caractérisée en ce que** le fond de chaque creux (V) présente également une structure, en particulier une surface rugueuse.

7. Dispositif de fabrication pour l'emboutissage profond d'une cuve d'incubation (W) ayant les particularités selon l'une quelconque des revendications précédentes, **caractérisé en ce que** le dispositif de fabrication comporte un moule positif (P) et un moule négatif, qui présente une structure rainurée et/ou en forme de gradins orientée longitudinalement.
